# FASCICULE DE BREVET EUROPEEN

(11) **EP 1 568 987 B1**
(45) Date de publication et mention de la délivrance du brevet: **21.01.2009**
(21) Numéro de dépôt: 05290302.8
(22) Date de dépôt: 10.02.2005
(51) Int. Cl.: G01N 21/71, H05H 1/00, G01N 21/66, G01J 3/443

(54) **Détection d'espèces gazeuses minoritaires par spectroscopie d'émission optique**
Detektion spezieller Minoritätsgase mit optischer Emissionsspektroskopie
Detection of special minority gases with optical emission spectroscopy

(30) Priorité: 26.02.2004 FR 0450353
(43) Date de publication de la demande: 31.08.2005
(73) Titulaire: Alcatel Lucent, 75008 Paris (FR)
(72) Inventeur: Sogan, Gloria, 74330 Epagny (FR); Bounouar, Julien, 74940 Annecy-le-Vieux (FR); Desbiolles, Jean-Pierre, 74350 Cruseilles (FR); Gaurand, Isabelle, 74940 Annecy-le-Vieux (FR)
(74) Mandataire: Korakis-Ménager, Sophie

(56) Documents cités:
- EP-A- 0 677 737
- WO-A-02/44698
- US-A- 5 991 020

## Description

La présente invention concerne la détection d'espèces gazeuses dans un mélange par spectroscopie d'émission optique.

Pour détecter les espèces gazeuses, on a déjà eu recours à la spectroscopie d'émission optique, par laquelle on utilise la radiation lumineuse émise par un plasma présent dans le mélange gazeux à analyser, on relève le spectre optique de ladite radiation par le plasma, et on procède à une analyse du spectre optique pour en déduire la présence des espèces gazeuses du mélange.

La méthode classique utilisée pour l'étape d'analyse du spectre optique consiste a visualiser lé spectre optique en temps réel et à le comparer aux spectres publiés dans les bibliothèques scientifiques réalisées pour chaque espèce gazeuse (WO-028/44 698). La méthode repose sur le fait que chaque espèce gazeuse génère une radiation lumineuse dont le spectre est caractéristique lorsqu'elle atteint un niveau d'excitation émettant de la lumière. Les bibliothèques scientifiques contiennent ainsi les spectres d'émission optique de chaque espèce gazeuse. Ces spectres: sont chacun constitués de la courbe des valeurs d'intensité lumineuse en fonction de la longueur d'onde, dans la plage dès longueurs d'onde des radiations lumineuses, c'est à-dire dans l'ultraviolet, le spectre visible, l'infrarouge. Généralement, le spectre d'émission optique d'une espèce gazeuse est une courbe d'allure ondulatoire qui présente un grand nombre de pics ou raies. Chaque raie est caractérisée par la longueur d'onde et par l'intensité dé la radiation lumineuse à cette longueur d'onde.

Dans les dispositifs connus, par exemple de EP-0 677 737, la visualisation du spectre optique d'émission est généralement effectuée par un ordinateur qui scrute les données émises par un spectromètre optique. Un logiciel associé au spectromètre permet habituellement d'agir sur le temps d'intégration du signal issu du spectromètre, et donc sur l'intensité du spectre. Le logiciel peut agir également sur le nombre de spectres dont on effectue la moyenne ayant affichage, ce qui permet de diminuer le bruit. Le logiciel permet alors de visualiser le spectre optique d'émission instantané, et de suivre l'évolution d'amplitude de certaines raies, pour en déduire l'évolution de la présence d'un gaz. En effet, l'amplitude d'une raie à une longueur d'onde définie permet généralement, lorsque le gaz est seul, de suivre l'évolution de la présence de ce gaz. Le logiciel permet également d'effectuer un certain nombre d'opérations mathématique telles que des soustractions de spectres.

Le spectre optique d'un mélange gazeux est généralement constitue parla combinaison des raies des spectres spécifiques de chaque espèce gazeuse présente dans le mélange.

De l'amplitude des raies de chaque spectre spécifique, on peut parfois déduire une mesure de la concentration de l'espèce gazeuse correspondante présente dans le mélange. Notamment le document US-5.991.020 concerne la détermination de la concentration d'une espèce, indépendamment de la température, du plasma, a partir du spectre lumineux émis par le plasma.

La mesure des concentrations des espèces gazeuses dans un mélange est assez facile et fiable lorsque les espèces gazeuses recherchées sont facilement excitables dans le plasma. En effet, de telles espèces gazeuses facilement excitables produisent un spectre d'émission optique dont les raies sont facilement visibles et mesurables.

Mais une telle mesure de concentration devient beaucoup plus difficile pour les espèces gazeuses plus difficilement excitables, surtout lorsqu'il s'agit d'espèces gazeuses minoritaires, c'est-à-dire présentes dans le mélange selon une proportion minoritaire. La mesure de concentration de telles espèces gazeuses faiblement excitables ou minoritaires dans un mélange n'est actuellement possible qu'avec des appareils de mesure onéreux, encombrants et difficiles à mettre en oeuvre, tels que le spectromètre de masse ou le spectromètre à infrarouge à transformée de Fourier (FTIR). Il est par exemple nécessaire d'utiliser ces appareils pour la mesure des traces d'humidité sous vide dans les mélanges gazeux sortant d'une chambre sous vide dans l'industrie des semi-conducteurs. L'humidité est alors présente en concentration de seulement quelques milliers de ppm. Le coût de la mesure la rend économiquement inapplicable notamment dans les procédés de fabrication de semi-conducteurs.

L'utilisation d'appareils de mesure spectroscopique plus simples n'a pas été envisagée pour le suivi des traces d'humidité. La difficulté vient notamment du fait que l'excitation d'un gaz dans un plasma peut varier fortement selon la nature du gaz, et selon que le gaz est seul ou selon qu'il est présent dans un mélange gazeux avec d'autres espèces.

Par exemple, si l'on considère l'humidité les raies caractéristiques de l'humidité, à observer, présente en faible quantité dans un mélange, sont peu ou pas décelables dans le spectre de l'espèce présente en quantité majoritaire et plus facilement excitable telle que l'azote. Le suivi des raies caractéristiques de l'humidité, par exemple les raies d'hydrogène Hα, Hβ, Hγ, la raie d'oxygène vers 777.3 nm, et la raie OH aux alentours de 306.8 nm par exemple, est quasi impossible dans un mélange de gaz où d'autres gaz tels que l'azote sont plus facilement excitables et prennent toute l'énergie disponible.

Pour cette raison, les espèces gazeuses minoritaires et/ou difficilement excitables, telles que l'humidité, présentes dans les mélanges gazeux des flux extraits des chambres sous vide de l'industrie des semi-conducteurs, ne sont jusqu'à présent généralement pas détectées par des procédés de spectroscopie d'émission optique classique.

Le problème proposé par la présente invention est d'éviter les inconvénients des systèmes de l'art antérieur, en particulier en permettant d'obtenir de façon fiable, rapide et peu onéreuse une indication sur la valeur et sur l'évolution de concentration des espèces gazeuses minoritaires et/ou difficilement excitables dans un mélange gazeux étudié, sans avoir recours à des appareils onéreux, encombrants et difficiles à mettre en oeuvre.

L'invention vise ainsi à permettre le suivi correct de la présence d'une espèce dans un gaz ou un mélange gazeux par un procédé de spectroscopie d'émission optique classique.

L'invention s'applique notamment au suivi de la composition des mélanges gazeux dans une chambre sous vide de l'industrie des semi-conducteurs, par exemple d'une chambre de procédés, d'une chambre de transfert de plaques.

L'idée essentielle de l'invention est pour cela de rechercher, et d'utiliser, l'influence que peuvent avoir les espèces gazeuses minoritaires et/ou faiblement excitables dans un mélange sur les raies spectrales caractéristiques des espèces gazeuses majoritaires et/ou plus aisément excitables du mélange.

En utilisant cela, l'invention vise ainsi à développer une méthode indirecte de mesure de présence et de concentration pour les espèces gazeuses difficilement excitables telles que l'humidité.

L'invention utilise alors l'observation selon laquelle certaines au moins des raies caractéristiques d'une espèce gazeuse majoritaire et/ou facilement excitable telle que l'azote ont une amplitude qui varie en fonction des espèces gazeuses minoritaires et/ou difficilement excitables du mélange telles que l'humidité.

Il est donc possible de suivre l'évolution des espèces difficilement excitables par spectroscopie d'émission optique, en analysant le comportement de l'amplitude des raies caractéristiques de l'espèce gazeuse majoritaire, qui sont sensibles à la présence des gaz peu excitables.

Pour atteindre ces buts ainsi que d'autres, l'invention propose ainsi un procédé de détection, par spectroscopie d'émission optique, d'au moins une espèce gazeuse minoritaire et/ou difficilement excitable en mélange avec au moins une espèce gazeuse majoritaire et/ou plus facilement excitable, dans lequel on utilise un plasma dans le mélange gazeux à analyser, et on relève le spectre optique original de la radiation émise par le plasma pour comparer ensuite le spectre émis a une bibliothèque de spectres connus.

Le procédé selon l'invention comprend une étape préalable d'observation des variations d'amplitude des raies caractéristiques de l'espèce gazeuse majoritaire et/ou facilement excitable en fonction de variations de concentration de l'espèce gazeuse minoritaire et/ou difficilement excitable. Pour cela, dans un flux, de préférence à pression constante, contenant une espèce gazeuse majoritaire et/ou facilement excitable, on introduit des quantités variables d'espèce gazeuse minoritaire et/ou difficilement excitable, et on mesure les variations d'amplitude des raies caractéristiques de l'espèce gazeuse majoritaire et/ou facilement excitable.

L'étape préalable d'observation est suivie d'une étape d'établissement d'un spectre spécifique, au cours de laquelle on retient, dans le spectre caractéristique de l'espèce gazeuse majoritaire et/ou facilement excitable, des raies sensibles c'est-à-dire des raies dont la variation d'amplitude en fonction des variations de concentration d'espèce gazeuse minoritaire et/ou difficilement excitable est supérieure à un seuil, détermine.

Le procédé selon l'invention comprend aussi une étape de détection au cours de laquelle, on retient, dans le spectre original, une ou plusieurs raies caractéristiques de l'espèce gazeuse majoritaire et/ou .facilement excitable dont l'amplitude est sensible à la présence de l'espèce minoritaire et/ou difficilement excitable, et on déduit de l'amplitude de cette ou de ces raies une information sur la concentration de l'espèce gazeuse minoritaire et/ou difficilement excitable.

Ce sont ces raies sensibles retenues du spectre spécifique dont on mesure ensuite l'amplitude, pour en effectuer éventuellement la somme ou la moyenne, ou tout autre traitement mathématique permettant d'améliorer la fiabilité ou la sensibilité de la mesure. Le résultat constitue une image de la concentration de l'espèce gazeuse minoritaire et/ou difficilement excitable présente dans le mélange.

De préférence, au cours d'une étape préalable, on établit et mémorise une fonction d'étalonnage représentant la variation d'amplitude de la ou des raies sensibles retenues en fonction de la concentration en espèce gazeuse minoritaire et/ou difficilement excitable;

Les étapes préalables d'observation et de détection sont, de préférence, réalisées à pression totale constante du mélange gazeux observé. On évite ainsi les erreurs possibles résultant d'une éventuelle influence des variations de pression sur l'amplitude des raies.

Si le procédé selon l'invention doit être mis en oeuvre pour mesurer une espèce gazeuse minoritaire dans un mélange dont la pression risque de varier, il peut être nécessaire de corriger la mesure d'amplitude des raies en fonction de la pression gazeuse. Selon un premier mode de réalisation, on peut retenir, dans le spectre caractéristique de l'espèce gazeuse majoritaire et/ou facilement excitable, des raies dont une combinaison telle que la moyenne est insensible aux variations de pression du mélange.

En alternative, on peut établir des courbes d'étalonnage en pression, avec lesquelles on corrige ensuite les valeurs d'amplitude des raies en fonction de la pression, pour en déduire la quantité d'espèce minoritaire réellement présente.

De préférence, on prévoit une étape préalable d'établissement d'une bibliothèque de spectres spécifiques contenant au moins un spectre spécifique pour chaque espèce gazeuse majoritaire et/ou facilement excitable à surveiller, ledit spectre spécifique étant réalisé par analyse spectrale de l'espèce gazeuse majoritaire et/ou facilement excitable au moyen de la chaîne de mesure par laquelle on veut mettre en oeuvre le procédé, et on utilise ladite bibliothèque pour la comparaison ultérieure avec le spectre du mélange.

Pour cela, au cours d'étapes préalables, on fait passer, dans le dispositif à spectromètre optique que l'on veut utiliser, un flux gazeux contenant le gaz pur à analyser, et on mémorise le spectre correspondant. En effet, la répartition énergétique des raies caractéristiques pour une même espèce gazeuse peut changer avec la puissance de la source et avec la pression. La bibliothèque de spectres va ainsi servir de base de données spécifique de l'équipement utilisé.

Si nécessaire, on mémorise également, dans la bibliothèque de spectres, des courbes d'étalonnage reflétant la relation entre l'amplitude des raies et la pression du gaz.

Le procédé peut avantageusement être appliqué à la détection de la vapeur d'eau comme espèce gazeuse minoritaire et/ou difficilement excitable dans un mélange.

L'espèce gazeuse majoritaire et/ou facilement excitable peut avantageusement être l'azote.

L'invention s'applique toutefois à des espèces gazeuses minoritaires et/ou difficilement excitables autres que la vapeur d'eau, et on peut utiliser les raies caractéristiques d'une espèce gazeuse majoritaire et/ou facilement excitable autre que l'azote.

Selon un autre aspect, l'invention propose un dispositif pour la mise en oeuvre d'un tel procédé de détection d'espèces gazeuses minoritaires et/ou difficilement excitables, le dispositif comprenant une source de plasma pour générer un plasma dans le mélange gazeux à étudier, des moyens pour recueillir et transmettre à un spectromètre optique la radiation émise par le plasma, un ordinateur pour analyser les signaux émis par le spectromètre optique, l'ordinateur comportant une unité centrale et une mémoire comprenant une zone de programmes contenant un programme enregistré comportant la suite d'instructions mettant en oeuvre le procédé, et une zone de bibliothèque contenant des spectres optiques spécifiques préenregistrés des espèces gazeuses majoritaires et/ou facilement excitables à analyser, et une fonction d'étalonnage représentant la variation d'amplitude de raies sensibles en fonction de la concentration en espèces gazeuses minoritaires et/ou difficilement excitables.

La source de plasma peut être : soit une source externe, telle que la source de plasma, d'une chambre de procédés ; soit une source intégrée au dispositif.

D'autres objets, caractéristiques et avantages de la présente invention ressortiront de la description suivante de modes de réalisation particuliers, faite en relation avec les figures jointes, parmi lesquelles:
- la figure 1 illustre schématiquement une réalisation pratique d'un dispositif de détection d'espèces gazeuses minoritaires selon la présente invention ;
- la figure 2 illustre un spectre d'émission optique tel que celui que peut donner un spectromètre d'émission optique dans l'analyse d'un mélange gazeux pris à titre d'exemple;
- la figure 3 illustre les variations d'intensité de certaines raies spectrales en fonction de la pression ;
- les figures 4 et 5 illustrent les variations d'intensité de certaines régions spectrales suite à des perturbation de pression ou d'humidité ; et
- la figure 6 illustre une courbe d'étalonnage de l'intensité de raie en fonction de la pression.

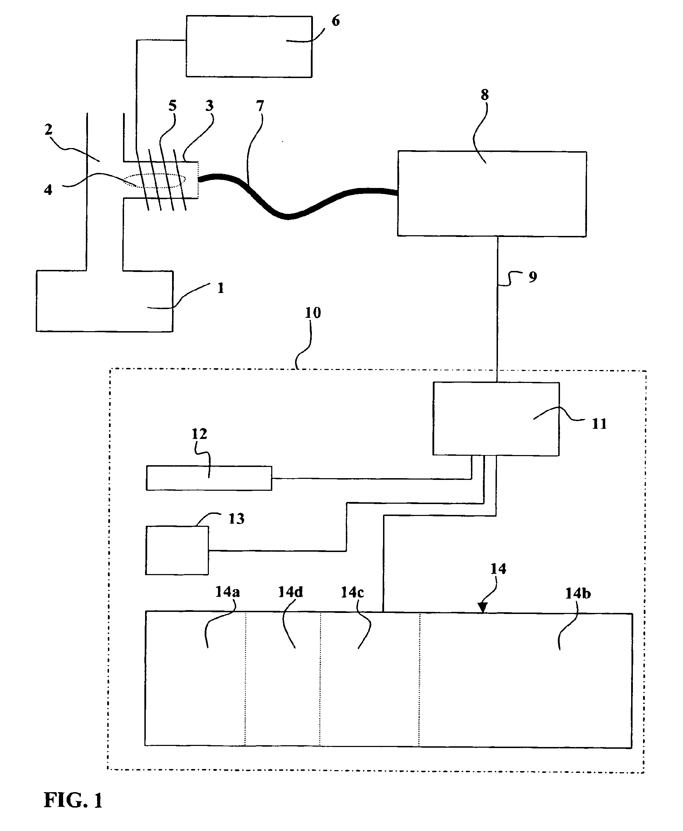

Dans le mode de réalisation illustré sur la figure 1, le dispositif de détection d'espèces gazeuses selon l'invention est associé à un équipement dans lequel circule un mélange gazeux à analyser. Un exemple d'un tel équipement comprend une chambre sous vide 1, pouvant être, de façon non limitative, une chambre de procédés ou une chambre de transfert utilisée dans la fabrication de semi-conducteurs, de microsystèmes électromécaniques (MEMS). Mais le dispositif peut également être appliqué à tout autre équipement dans lequel on veut analyser un mélange gazeux.

Dans le cas de la figure 1, les mélanges gazeux sortent de la chambre sous vide 1 par une canalisation de vide 2.

Dans la canalisation de vide 2, ou dans une enceinte d'excitation dérivée 3, ou encore dans la chambre sous vide 1, se trouve une zone dans laquelle le mélange gazeux est excité en formant un plasma 4. Par exemple, dans l'enceinte d'excitation dérivée 3, on a réalisé un plasma 4 par excitation électromagnétique au moyen d'une antenne d'excitation 5 alimentée par un générateur de puissance 6. Des exemples consistent à utiliser un générateur micro-ondes, un générateur RF de type ICP, ou tout autre générateur approprié.

La radiation lumineuse émise par le plasma 4 est captée et transmise jusqu'à un spectromètre optique 8. La transmission peut être assurée par une fibre optique 7, ou par un connecteur adapté, ou par tout autre moyen de transmission de lumière.

Le spectromètre optique 8 génère de façon connue les signaux image du spectre optique détecté, et les envoie par une ligne 9 à un ordinateur 10.

L'ordinateur 10, schématiquement illustré, comprend une unité centrale 11 connectée à des moyens d'entrée-sortie 12 tels qu'un clavier, connectée à des moyens de visualisation 13 tels qu'un écran, et connectée à une mémoire 14.

La mémoire 14 contient une zone de programmes 14a dans laquelle sont enregistrés des programmes.

La mémoire 14 contient également une zone de bibliothèque 14b, susceptible de contenir des données de référence, notamment les spectres optiques connus des espèces gazeuses pures, et la fonction d'étalonnage.

La mémoire 14 contient une zone de mémoire de mesure 14c, dans laquelle peuvent être enregistrées les données des spectres optiques bruts reçus du spectromètre optique 8.

La mémoire 14 contient une zone de mémoire de résultats 14d pouvant contenir les données d'amplitude de raies sensibles et de concentration d'espèces gazeuses.

La zone de programmes 14a contient notamment un programme de traitement de spectre selon le procédé de l'invention.

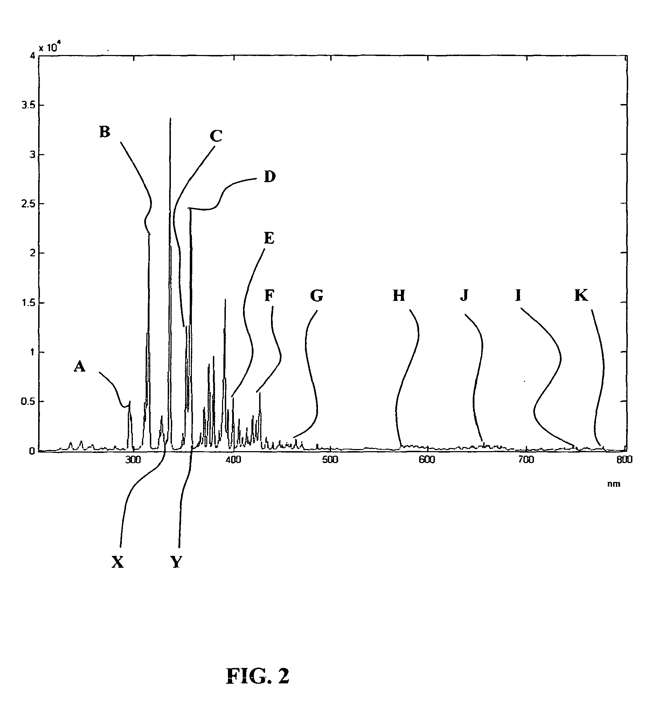

Considérons maintenant le spectre optique illustré sur la figure 2 à titre d'exemple. Il s'agit de la courbe d'intensité lumineuse, en ordonnées, en fonction des longueurs d'onde en abscisses. On voit que cette courbe, correspondant par exemple à un mélange gazeux donné dans lequel l'azote constitue l'espèce majoritaire, comprend un grand nombre de pics ou de raies, c'est-à-dire de zones formant un maximum, et un même nombre de zones correspondant à un minimum.

Dans le spectre de mélange illustré sur la figure 2, on distingue par exemple des pics ou raies A, B, C, D, E, F, G, H, I, J et K et des minimums tels que X ou Y.

Supposons par exemple que les raies B, C, D, F, G, J et K sont caractéristiques du spectre d'émission optique habituel d'une espèce gazeuse majoritaire du mélange, par exemple de l'azote.

Dans le mélange, se trouve une espèce gazeuse minoritaire et/ou difficilement excitable telle que l'humidité, dont les raies ne sont pas clairement apparentes dans le spectre de la figure 2.

Le procédé selon l'invention permet de caractériser la concentration en humidité dans le mélange par l'analyse des raies caractéristiques de l'espèce gazeuse majoritaire, c'est-à-dire l'analyse des raies B, C, D, F, G, J et K.

Pour cela, on va rechercher, parmi les raies B, C, D, F, G, J et K, la ou les raies caractéristiques de l'azote dont l'amplitude est sensible à la présence de l'espèce minoritaire dans le mélange. On réalise ainsi, avec le dispositif de la figure 1, une étape préalable d'observation des variations d'amplitude des raies caractéristiques B, C, D, F, G, J et K en fonction des variations de concentration de l'espèce gazeuse minoritaire. En pratique, on réalise plusieurs mesures de spectroscopie d'émission optique sur des mélanges présents dans la canalisation de vide 2, en faisant varier la concentration en espèce gazeuse minoritaire. On constate alors que certaines raies caractéristiques de l'azote ont une amplitude qui varie, alors que d'autres raies ont une amplitude quasiment constante.

Supposons par exemple que l'on constate une variation d'amplitude des raies B, C, F et J, alors que les raies D, G et K restent insensibles.

Par conséquent, on pourra déduire de l'amplitude de tout ou partie de ces raies B, C, F et J, dans le spectre de mélange de la figure 2, une information sur la concentration de l'espèce gazeuse minoritaire, même si les raies caractéristiques de l'espèce gazeuse minoritaire ne sont pas visibles sur le spectre.

Ainsi, à l'issue de l'étape préalable d'observation, on établit un spectre spécifique, que l'on mémorise dans la zone de mémoire de bibliothèque 14b, et comprenant, dans le spectre caractéristique de l'espèce gazeuse majoritaire, les seules raies qui sont sensibles à la présence de l'espèce gazeuse minoritaire, c'est-à-dire les raies dont la variation d'amplitude en fonction des variations de concentration d'espèces gazeuses minoritaires est supérieure à un seuil déterminé conférant une sensibilité suffisante à la méthode de mesure selon l'invention.

De préférence, au cours de l'étape préalable d'observation des variations d'amplitude, on établit et mémorise une fonction d'étalonnage qui représente la variation d'amplitude de la ou des raies sensibles en fonction de la concentration en espèce gazeuse minoritaire.

Par exemple, cette fonction d'étalonnage est un tableau contenant les valeurs d'amplitude des raies B, C, F et J et des valeurs correspondantes de concentration en espèce gazeuse minoritaire que l'on a volontairement injectées dans la canalisation de vide 2 pendant l'étape préalable d'observation des variations d'amplitude.

Il est important, selon l'invention, de réaliser l'étape préalable d'observation des variations d'amplitude à l'aide du dispositif tel que celui de la figure 1 qui sera ensuite utilisé pour les mesures de concentration d'espèces gazeuses minoritaires.

En effet, l'émission des raies caractéristiques dans le spectre dépend de différents paramètres du dispositif, notamment de la puissance de génération du plasma, des caractéristiques géométriques du dispositif, de la sensibilité du spectromètre optique. En se plaçant dans les mêmes conditions de mesure, on génère les mêmes raies caractéristiques du spectre.

On prévoit une étape préalable d'établissement d'une bibliothèque de spectres spécifiques, contenant au moins un spectre spécifique pour chaque espèce gazeuse majoritaire à surveiller. Ce spectre spécifique est réalisé par analyse spectrale de l'espèce gazeuse majoritaire au moyen de la chaîne de mesure par laquelle on veut mettre en oeuvre le procédé, et on utilise ensuite ladite bibliothèque pour la comparaison avec le spectre du mélange.

Le logiciel peut baser la mesure de concentration par exemple soit sur la mesure d'intensité de l'une des raies caractéristiques B, C, F et J, soit sur l'intensité moyenne d'émission des quatre raies B, C, F et J sensibles, soit sur la somme des intensités, soit sur le résultat de tout autre traitement mathématique approprié effectué sur les intensités des raies. On peut alors afficher l'évolution de l'espèce gazeuse minoritaire, représentée par l'évolution de l'intensité moyenne ou totale des raies sensibles B, C, F et J.

Le suivi d'évolution de tout ou partie des raies caractéristiques sensibles B, C, F et J est rapide, et permet ainsi un suivi en temps réel de la concentration de l'espèce gazeuse minoritaire.

Parmi les raies B, C, F et J de l'espèce gazeuse majoritaire qui sont sensibles à la présence de l'espèce gazeuse minoritaire, on constate généralement que certaines raies telles que les raies B, C et F sont également sensibles à la pression du gaz dans lequel on effectue le contrôle, alors que d'autres raies de l'espèce gazeuse majoritaire telles que la raie J peuvent être insensibles à la pression, au moins dans certaines plages de pression.

Egalement, certaines raies peuvent être sensibles à la pression de manière monotone, c'est-à-dire par exemple de manière croissante sur toute leur zone de variation, tandis que d'autres raies peuvent avoir des variations non monotones.

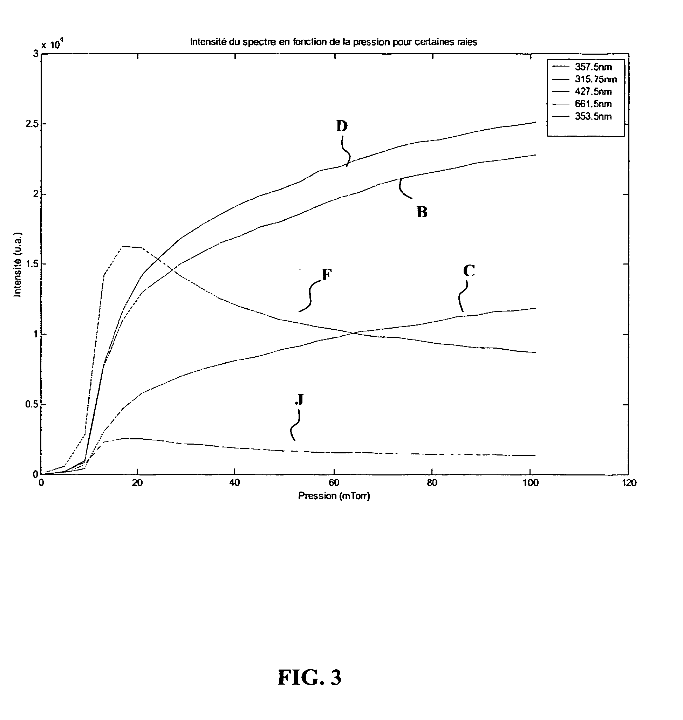

Ces phénomènes sont illustrés sur la figure 3. Cette figure illustre la variation de l'intensité de certaines raies caractéristiques sensibles de l'espèce majoritaire en fonction de la pression du mélange gazeux. La raie B suit une variation monotone, continûment croissante lorsque la pression augmente. Il en est de même de la raie C, avec une variation un peu moins rapide. La raie D suit également une variation continûment croissante, la croissance étant encore plus rapide, mais elle n'est pas retenue car elle est insensible à la présence de l'espèce minoritaire. La raie F a une intensité qui croît fortement dans la zone des faibles pressions, puis elle atteint un maximum pour redescendre ensuite progressivement lorsque la pression augmente. La raie J suit une courbe similaire plus plate, avec une montée rapide, puis un sommet et une redescente lente et presque imperceptible.

On peut par exemple considérer que, dans la zone de pression comprise entre 20 et 100 mTorr, la raie J n'est pratiquement pas sensible à la pression. On pourrait donc considérer uniquement la raie J pour en déduire une bonne évaluation de la quantité d'espèce minoritaire présente dans le mélange, indépendamment de la pression du mélange.

Par contre, l'évaluation de la quantité d'espèce minoritaire dans le mélange ne peut se faire à l'aide de l'une des raies sensibles B, C et F qu'à la condition de connaître simultanément la pression du mélange gazeux.

Pour cela, on peut, selon l'invention, utiliser, si elle existe, une raie du spectre qui soit à la fois sensible à la pression de manière monotone comme les raies B et C, et qui soit simultanément insensible à la présence de l'espèce minoritaire. Tel peut être le cas, par exemple, de la raie D, qui présente une variation monotone en fonction de la pression comme illustré sur la figure 3, et qui n'a pas été retenue comme étant sensible à la présence de l'espèce minoritaire. En considérant l'amplitude de la raie D, on peut donc en déduire la pression du mélange. Ensuite, connaissant la pression, la quantité d'espèce minoritaire est déduite de l'amplitude des autres raies B, C, F et J qui sont sensibles à la présence de l'espèce minoritaire.

Pour certaines espèces majoritaires en présence de certaines espèces minoritaires, il peut se produire qu'aucune raie ne soit insensible à la pression, et également qu'aucune raie ne soit insensible à la présence de l'espèce minoritaire. Dans ce cas, on peut chercher à compenser l'effet des variations de pression en considérant les raies qui sont à la fois sensibles aux variations de pression et sensibles à la présence d'espèces minoritaires, en combinant les amplitudes de ces raies de façon à déterminer une moyenne qui ne varie pas sensiblement en fonction de la pression. Ce traitement permet ainsi d'obtenir un signal sensible à l'humidité sans être sensible à la pression. L'intensité des raies qui varient positivement par rapport à la pression compense les variations éventuelles de l'intensité des raies qui varient négativement par rapport à la pression, de façon à obtenir un signal qui ne dépend plus des variations de pression. Ce signal dépend uniquement de la quantité d'espèce minoritaire, et l'on peut ainsi en déduire une bonne évaluation de la quantité d'espèce minoritaire dans le mélange. Un exemple, sur la figure 3, est de combiner les raies B et F de l'azote dans le domaine de pression compris entre 20 et 100 mTorr.

En pratique, on pourra généralement considérer des régions de spectre d'espèce majoritaire qui sont sensibles à la présence d'une espèce minoritaire, et des régions de spectre qui sont sensibles à la pression.

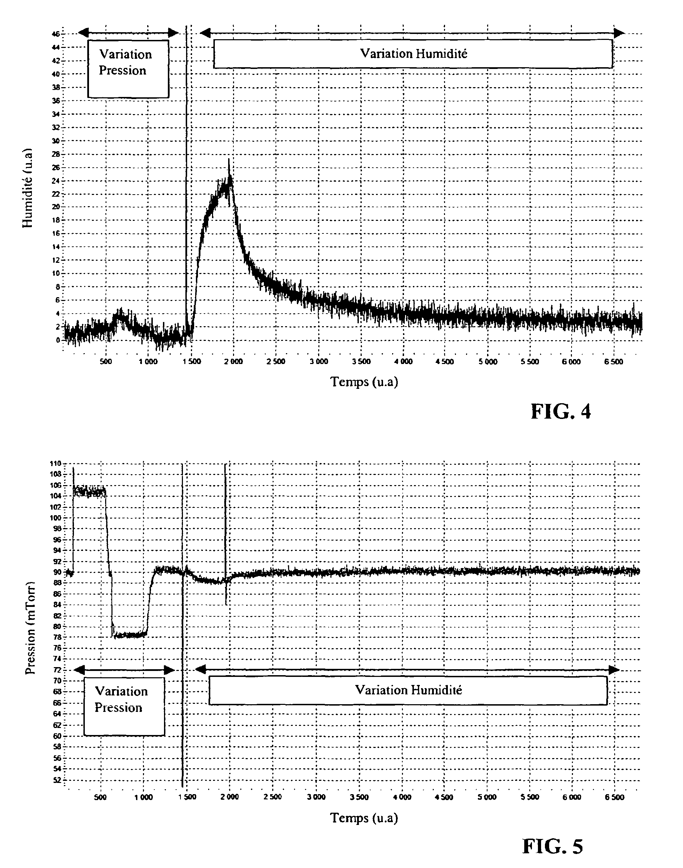

Par exemple, dans le spectre de l'azote, la région de spectre comprise entre 718 nm et 728 nm est sensible à la pression, comme on le voit sur la figure 4 : au cours d'une première période de temps, entre 0 et 1 500 unités arbitraires de temps, on a fait varier la pression gazeuse du mélange, et la moyenne des intensités des régions considérées du spectre est restée sensiblement constante. Dans une seconde période de temps entre 1 500 et 6 500 unités arbitraires de temps, on a fait varier l'humidité, et la courbe d'intensité a varié en conséquence.

Lorsqu'on considère la région de spectre comprise entre 773 nm et 781 nm, on obtient, également pour une variation de pression suivie d'une variation d'humidité, la courbe illustrée sur la figure 5. Cela montre que cette région de spectre de l'azote est sensible à la pression, et pratiquement insensible à la présence d'humidité.

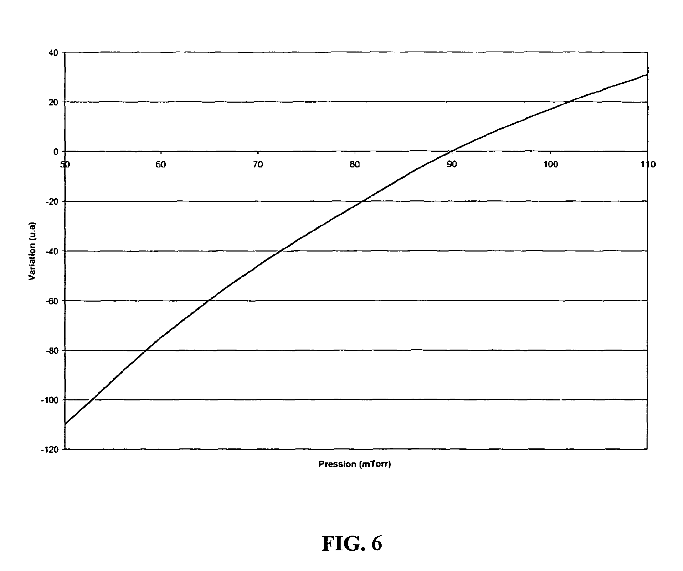

Une autre façon de corriger l'influence de la pression sur la mesure de la quantité d'espèce gazeuse minoritaire est illustrée sur la figure 6. On réalise pour cela une courbe d'étalonnage par rapport à la pression, en déterminant, par des essais préalables, la variation de l'amplitude d'une ou plusieurs raies en fonction de la pression, autour de la pression moyenne qui règne généralement dans le mélange pendant la mesure. Dans l'exemple de la figure 6, on a étalonné l'amplitude en fonction de la pression autour d'une pression moyenne de l'ordre de 90 mTorr. Ensuite, la connaissance de la pression donnée par un autre capteur ou un autre moyen d'évaluation de pression permet de corriger l'amplitude mesurée de la ou des raies, selon la valeur indiquée par la courbe d'étalonnage, pour en déduire ensuite la valeur exacte de la quantité d'espèce minoritaire qui correspond à la valeur d'amplitude corrigée.

On peut appliquer le suivi à plusieurs équipements parallèles ayant des fonctionnements similaires, et effectuer des comparaisons afin de détecter d'éventuels défauts sur certains équipements.

Pour cela, on crée tout d'abord une référence sur un équipement. Les signatures ainsi obtenues vont permettre de comparer les différents équipements, et ainsi de déceler si l'un des paramètres d'un équipement a évolué.

Cette méthode peut s'avérer particulièrement utile après une intervention sur un équipement, lors d'une remise en production par exemple. Les données relatives aux espèces gazeuses minoritaires peuvent également être associées à d'autres données provenant de l'équipement. L'objectif est d'obtenir une population de données de référence de l'équipement.

Ensuite, le suivi de l'équipement en temps réel va permettre la détection de défauts par traitement statistique. L'origine du défaut peut alors être interprétée en fonction des signatures préalablement répertoriées des défauts apparus.

L'intérêt de l'invention est alors de permettre de fournir des informations sur ce qui se passe réellement à l'intérieur d'un équipement, par exemple à l'intérieur d'une chambre de procédés, par des moyens rapides et peu onéreux. On peut alors affiner la signature de l'équipement grâce à ces nouvelles données in situ.

En pratique, l'invention peut trouver des applications multiples.

Selon un premier exemple, on peut surveiller l'état de fonctionnement normal d'un équipement dans lequel circule le mélange gazeux analysé, par exemple l'état de la chambre sous vide 1. Pour cela, on sélectionne une espèce gazeuse minoritaire qui est représentative de cet état de fonctionnement normal de l'équipement 1. On suit en temps réel l'évolution de ladite espèce gazeuse minoritaire sélectionnée, on compare cette évolution avec des données d'évolution de référence, et on génère un signal d'alerte ou de commande en cas de divergence par rapport aux données d'évolution de référence.

Une application de cet exemple est le contrôle des propriétés d'étanchéité de l'équipement 1. En ce qui concerne l'étanchéité vis-à-vis de l'atmosphère extérieure, on peut rechercher la présence et l'évolution de traces d'humidité dans l'équipement 1, ou de façon générale la présence et l'évolution de toute espèce minoritaire représentative des fuites, c'est-à-dire qui n'est pas censée être présente dans l'équipement 1 mais qui est présente à l'extérieur de celui-ci. Cette présence d'humidité dans l'équipement 1 est alors la preuve de l'existence de fuites. Le procédé de l'invention procure une grande sensibilité dans la recherche de telles fuites, et sa mise en oeuvre est peu onéreuse.

De préférence, dans la recherche des fuites, on peut avantageusement mettre en relation temporelle l'évolution des traces d'humidité ou autre espèce minoritaire représentative des fuites de l'équipement 1 avec la suite des événements fonctionnels de l'équipement 1, pour en déduire l'origine des variations dans ladite évolution des traces d'humidité ou autre espèce minoritaire représentative des fuites. Par exemple, on peut repérer qu'une augmentation brusque de présence d'humidité est simultanée avec l'ouverture d'une porte de l'équipement, et l'on en déduit alors que l'humidité est apportée non pas par une fuite mais par la mise en communication avec une atmosphère plus humide à travers la porte. Le phénomène est illustré par exemple sur la figure 4, dans laquelle on repère une croissance brusque d'humidité à partir de l'unité temporelle 1500.

En pratique, dans un dispositif de détection d'espèces gazeuses minoritaires selon l'invention, associé à un équipement 1 dont on veut détecter les fuites, on prévoit des moyens pour synchroniser la détection de l'espèce gazeuse minoritaire représentative des fuites avec les événements fonctionnels de l'équipement 1 à surveiller. Ces moyens pour synchroniser la détection peuvent comprendre l'unité centrale 11 associée à un sous-programme approprié, par exemple pour visualiser de manière synchrone l'évolution temporelle de l'espèce minoritaire, par exemple telle qu'illustrée sur la figure 4, et les événements fonctionnels de l'équipement 1 tels que les ouvertures de porte, les injections de gaz, les ouvertures et fermetures de vannes, les introductions ou extractions de plaquettes.

Un exemple d'application particulièrement important du procédé selon l'invention est le contrôle des chambres de transfert de plaques. Un tel contrôle, rendu possible et peu onéreux par le procédé de l'invention, consiste à suivre l'évolution des traces d'humidité dans une chambre de transfert de plaques. Ce contrôle permet de détecter des problèmes qui peuvent intervenir sur le contenu de la chambre de transfert, c'est-à-dire sur les plaques de semi-conducteur, avant que ces plaques n'entrent dans une nouvelle chambre de procédés. On peut ainsi détecter une éventuelle contamination pré ou post-process, contamination susceptible de réduire significativement le rendement de la production et les performances de l'équipement.

Selon un second exemple, le procédé de l'invention s'applique à la détection de déviation d'un procédé mis en oeuvre dans l'équipement. Pour cela, on sélectionne une espèce gazeuse minoritaire qui est représentative de l'état de progrès du procédé mettant en oeuvre le mélange gazeux analysé ; on suit en temps réel l'évolution de ladite espèce gazeuse minoritaire sélectionnée, on compare cette évolution avec des données d'évolution de référence du procédé, et on génère un signal d'alerte ou de commande en cas de divergence par rapport aux données d'évolution de référence du procédé.

Selon un autre exemple, le procédé de mesure de l'invention s'applique à la surveillance de l'efficacité d'une purge d'enceinte par des gaz de purge. Pour cela, on sélectionne une espèce gazeuse minoritaire qui est représentative de l'état de progrès de ladite purge par des gaz de purge dont on effectue la détection ; on suit en temps réel l'évolution de ladite espèce gazeuse minoritaire sélectionnée, on compare cette évolution avec des données d'évolution de référence de la purge, et on génère un signal d'alerte ou de commande lorsqu'est atteint un état des données d'évolution de purge indiquant la fin de purge, par exemple en cas d'atteinte d'un seuil donné correspondant à une fin de purge. Par exemple, on peut surveiller la purge d'une chambre par de l'azote, la chambre ayant précédemment contenu du chlore. On va alors surveiller la présence et l'évolution du chlore, espèce minoritaire, dans l'azote qui devient l'espèce majoritaire en cours de purge.

Selon un autre exemple, le procédé de détection d'espèces gazeuses minoritaires selon l'invention s'applique à la détection de fin de reconditionnement d'une chambre. Dans ce cas, on sélectionne une espèce gazeuse minoritaire qui est représentative de l'état de reconditionnement d'une chambre en cours de reconditionnement ; on suit en temps réel l'évolution de ladite espèce gazeuse minoritaire sélectionnée dans ladite chambre en cours de reconditionnement, on compare cette évolution avec des données d'évolution de référence de reconditionnement de chambre, par exemple avec un seuil donné, et on génère un signal d'alerte ou de commande lorsqu'est atteint un état des données de ladite espèce gazeuse minoritaire sélectionnée indiquant la fin de reconditionnement de chambre, par exemple lorsqu'un seuil prédéterminé est atteint.

La présente invention n'est pas limitée aux modes de réalisation qui ont été explicitement décrits, mais elle en inclut les diverses variantes et généralisations qui sont à la portée de l'homme du métier.

## Revendications

1. Procédé de détection, par spectroscopie d'émission optique, d'au moins une espèce gazeuse minoritaire et/ou difficilement excitable en mélange avec au moins une espèce gazeuse majoritaire et/ou plus facilement excitable, dans lequel on utilise un plasma (4) dans le mélange gazeux à analyser, et on relève le spectre optique orignal de la radiation émise par le plasma (4) pour comparer ensuite le spectre émis à une bibliothèque de spectres connus, **caractérisé en ce qu'**il comprend les étapes suivantes :
- une étape d'observation des variations d'amplitude des raies caractéristiques (B, C, D, F, G, J, K) de l'espèce gazeuse majoritaire et/ou facilement excitable en fonction de variations de concentration de l'espèce gazeuse minoritaire et/ou difficilement excitable,
- une étape d'établissement d'un spectre spécifique, au cours de laquelle on retient, dans le spectre caractéristique de l'espèce gazeuse majoritaire et/ou facilement excitable, des raies sensibles (B, C, F, J) dont la variation d'amplitude en fonction des variations de concentration d'espèce gazeuse minoritaire et/ou difficilement: excitable est supérieure à un seuil déterminé,
- une étape de détection au cours de laquelle on déduit de l'amplitude de cette ou de ces raies (B, C, F, J) une information sur la concentration de l'espèce gazeuse minoritaires ét/ou difficilement excitable.

2. Procédé selon la revendication 1, dans lequel, au cours d'une étape préalable, or établit et mémorisé une fonction d'étalonnage représentant la variation d'amplitude de la ou des raies sensibles (B, C, F, J) retenues en fonction de la concentration en espèce gazeuse minoritaire et/ou difficilement excitable.

3. Procédé selon l'une des revendications 1 et 2, dans lequel les étapes d'observation et de détection sont réalisées à pression totale constante.

4. Procédé selon l'une des revendications 1 à 3, dans lequel on retient, dans le spectre caractéristique de l'espèce gazeuse majoritaire et/ou facilement excitable, des raies (F, G) dont une combinaison telle que la moyenne est insensible aux variations de pression du mélange.

5. Procédé selon l'une des revendications précédentes, dans lequel on établit des courbes d'étalonnage en pression, avec lesquelles on corrige ensuite les valeurs d'amplitude des raies en fonction de la pression, pour en déduire la quantité d'espèce minoritaire réellement présente.

6. Procédé selon l'une des revendications précédentes, comprenant une étape préalable d'établissement d'une bibliothèque de spectres spécifiques contenant au moins un spectre spécifique pour chaque espèce gazeuse majoritaire et/ou facilement excitable à surveiller, ledit spectre spécifique étant réalisé par analyse spectrale de l'espèce gazeuse majoritaire et/ou facilement excitable au moyen de la chaîne de mesure par laquelle on veut mettre en oeuvre le procédé, et on utilise ladite bibliothèque pour la comparaison ultérieure avec le spectre du mélange.

7. Procédé selon l'une des revendications précédentes, appliqué à la détection de la vapeur d'eau comme espèce gazeuse minoritaire et/ou difficilement excitable dans un mélange.

8. Procédé selon la revendication 7, dans lequel l'espèce gazeuse majoritaire et/ou facilement excitable est l'azote.

9. Procédé selon l'une des revendications 1 à 8, dans lequel
- on sélectionne une espèce gazeuse minoritaire qui est représentative de l'état de fonctionnement normal d'un équipement (1) dans lequel circule le mélange gazeux analysé,
- on suit en temps réel l'évolution de ladite espèce gazeuse minoritaire sélectionnée,
- on compare cette évolution avec des données d'évolution de référence, et
- on génère un signal d'alerte ou de commande en cas de divergence par rapport aux données d'évolution de référence.

10. Procédé selon la revendication 9, dans lequel on surveille les fuites éventuelles de l'équipement (1) en suivant la présence et l'évolution de l'espèce minoritaire représentative des fuites, absente dans l'équipement (1) mais présente à l'extérieur de celui-ci.

11. Procédé selon la revendication 10, dans lequel on met en relation temporelle l'évolution de l'espèce minoritaire représentative des fuites de l'équipement (1) avec la suite des événements fonctionnels de l'équipement (1), pour en déduire l'origine des variations dans ladite évolution.

12. Procédé selon l'une des revendications 1 à 8, dans lequel
- on séléctionne une espèce gazeuse minoritaire qui est représentative de l'état de progrès d'un procédé mettant en oeuvre le mélange gazeux analysé,
- on suit en temps réel l'évolution de ladite espèce gazeuse minoritaire sélectionnée,
- on compare cette évolution avec des données d'évolution de référence du procédé, et
- on génère un signal d'alerte ou de commande en cas de divergence par rapport aux données d'évolution de référence du procédé.

13. Procédé selon l'une des revendications 1 à 8, dans lequel
- on sélectionne une espèce gazeuse minoritaire qui est représentative de l'état de progrès d'une purge d'enceinte par des gaz de purge dont on effectue la détection,
- on suit en temps réel l'évolution de ladite espèce gazeuse minoritaire sélectionnée,
- compare cette évolution avec des données d'évolution de référence de la purge, et
- génère un signal d'alerte ou de commande lorsqu'est atteint un état des donnés d'évolution de purge indiquant la fin dé purge.

14. Procédé selon la revendication 13, dans lequel on surveille la présence et l'évolution du chlore dans l'enceinte en cours de purge par l'azote.

15. Procédé selon l'une quelconque des revendications 1 à 8, dans lequel
- on sélectionne une espèce gazeuse minoritaire qui est représentative de l'état de reconditionnement d'une chambre en cours de reconditionnement,
- on suit en temps réel l'évolution de ladite espèce gazeuse minoritaire sélectionnée dans ladite chambre en cours de reconditionnement.
- on compare cette évolution avec des données d'évolution de référence de reconditionnement de chambre, et
- on génère un signal d'alerte ou de commande lorsqu'est atteint un état des données de ladite espèce gazeuse minoritaire sélectionnée indiquant la fin de reconditionnement de chambre.

16. Dispositif pour la mise en oeuvre d'un procédé de détection d'espèces gazeuses minoritaires et/ou difficilement excitables selon l'une des revendications précédentes, comprenant
- une source de plasma (3, 5, 6) pour générer un plasma (4) dans le mélange gazeux à étudier,
- des moyens (7) pour recueillir et transmettre à un spectromètre optique (8) la radiation émise par le plasma (4),
- un ordinateur (10) pour analyser les signaux émis par le spectromètre optique (8), l'ordinateur (10) comportant une unité centrale (11) et une mémoire (14) comprenant
- une zone de programmes (14a) contenant un programme enregistré comportant la suite d'instructions mettant en oeuvre le procédé, et
- une zone de bibliothèque (14b) contenant des spectres optiques spécifiques préenregistrés des espèces gazeuses majoritaires et/ou facilement excitables à analyser, et une fonction d'étalonnage représentant la variation d'amplitude de raies sensibles (B, C, F, J) en fonction de la concentration en espèces gazeuses minoritaires et/ou difficilement excitables.

17. Dispositif selon la revendication 16, associé à un équipement (1) dont on veut détecter les fuites, et comprenant des moyens (11) pour synchroniser la détection de l'espèce gazeuse minoritaire représentative des fuites avec les événements fonctionnels de l'équipement (1).

## Claims

1. A method for detecting, by optical emission spectroscopy, at least one minority and/or difficult-to-excite gas species in a mixture with at least one majority and/or easy-to-excite gas species, wherein a plasma (4) is used in the gas mixture to be analyzed, and the original optical spectrum of the radiation emitted by the plasma (4) is recorded so that the emitted spectrum may be compared to a library of known spectra, **characterized in that** it comprises the following steps:
- a step of observing amplitude variations of characteristic lines (B, C, D, F, G, J, K) of the majority and/or easy-to-excite gas species, based on variations in the concentration of the minority and/or difficult-to-excite gas species,
- a step of establishing a specific spectrum, during which sensitive lines (B, C, F, J), whose amplitude variation based on variations in the concentration of the minority and/or difficult-to-excite gas species is greater than a determined threshold, are retained;
- a step of detection, during which a piece of information regarding the concentration of the minority and/or difficult-to-excite gas species is deduced from the amplitude of this or those lines (B, C, F, J).

2. A method according to claim 1, wherein, during a prior step, a calibration function is established and saved, said calibration function representing the amplitude variation of the sensitive line(s) (B, C, F, J) retained based on the concentration of the minority and/or difficult-to-excite gas species.

3. A method according to one of the claims 1 or 2, wherein the steps of observing and detection are carried out at constant total pressure.

4. A method according to one of the claims 1 to 3, wherein, within the characteristic spectrum of the one majority and/or easy-to-excite gas species, lines (F, G) are retained, a combination of which, such as the mean, is insensitive to the mixture's variations in pressure.

5. A method according to one of the preceding claims, wherein pressure calibration curves are established, with which the amplitude values of the lines are then corrected as a function of pressure, in order to deduce therefrom the quantity of the minority species which is actually present.

6. A method according to one of the preceding claims, comprising a prior step of establishing a library of specific spectra containing at least one specific spectrum for every majority and/or easy-to-excite gas species to be monitored, said specific spectrum being constricted by spectral analysis of the majority and/or easy-to-excíte gas species by means of the measurement process by which the method is meant to be implemented, and said library is used for comparison with the mixture's spectrum at a later time.

7. A method according to one of the preceding claims, applied to the detection of water vapor as a minority and/or diffícult-to-excite gas species within a mixture.

8. A method according to claim 7, wherein the majority and/or easy-to-excite gas species is nitrogen.

9. A method according to one of the claims to 8 wherein:
- a minority gas species is selected, said species being representative of the normal operating state of a device (1) wherein the analyzed gas mixture is circulating,
- the evolution of said minority gas species is tracked in real time,
- this evolution is compared with reference evolution data, and
- an alert or command signal is generated in the event of any deviation from the reference evolution data.

10. A method according to claim 9, wherein any leaks in the device (1) that may occur are monitored by tracking the presence and evolution of the minority species representative of the leaks, which is absent from the device (1) but present outside of it.

11. A method according to claim 10, wherein a temporary relationship is created between the evolution of the minority species representative of the leaks in the device (1) and said device's (1) series of functional events, in order to deduce therefrom the origin of the variations in said evolution.

12. A method according to one of the claims 1 to 8, wherein
- a minority gas species is selected, said species being representative of the state of progress of a method implementing the analyzed gaseous mixture,
- the evolution of said selected minority gas species is tracked in real time within said chamber being refurbished,
- this evolution is compared with process reference evolution data, and
- an alert or command signal is generated in the event of any deviation from the process reference evolution data.

13. A method according to one of the claims 1 to 8, wherein
- a minority gas species is selected, said species being representative of the state of progress of a chamber purge by purge gases which are being detected,
- the evolution of said selected minority gas species is tracked in real time within said chamber being refurbished,
- this evolution is compared with purge reference evolution data, and
- an alert signal or command is generated once a state of purge change data has been reached indicating the end of purging.

14. A method according to claim 13, wherein the presence and evolution of the chlorine in the chamber during the nitrogen purge is monitored.

15. A method according to one of the claims 1 to 8, wherein
- a minority gas species is selected, said species being representative of the refurbishing status of a chamber being refurbished.
- the evolution of said selected minority gas species is tracked in real time within said chamber being refurbished,
- this evolution is compared with chamber refurbishment reference evolution date, and
- an alert signal or command is generated once a status of data for said selected minority gas species has been reached indicating the end of chamber refurbishment.

16. A device for implementing a minority and/or difficult-to-excite gas species according to one of the receding claims, comprising
- a source of plasma gas (3, 5, 6) for generating a plasma (4) within the gas mixture to be studied,
- means (7) for gathering and transmitting the radiation emitted by said plasma (4) to an optical spectrometer (8),
- a computer (10) for analyzing the signals sent by the optical spectrometer (8), said computer (10) comprising a central unit (11) and a memory (14) comprising
- a program area (14a) containing a saved program comprising the series of instructions implementing the method, and
- a library area (14b) containing pre-saved specific optical spectra of the majority and/or easy-to-excite gas species, and a calibration function representing the amplitude variation of the sensitive lines (B, C, F, J) based on the concentration of the minority and/or difficult-to-excite gas species.

17. An apparatus according to claim 16, associated with a device (1) for which it is desired that leaks are to be defected, and comprising means (11) for synchronizing the detection of the minority gas species representative of the leaks with the functional events of the device (1) functional.

## Patentansprüche

1. Verfahren zur Detektion mit optischer Emtsstonsspektroskopie von mindestens einer minoritären und/oder schwer anregbaren gasförmigen Spezies in einem Gemisch mit mindestens einer majoritären und/oder leichter anregbaren gasformigen Spezies, in welchem ein Plasma (4) in dem zu analysierenden gasförmigen Gemisch verwendet Wird, und wobei man das ursprüngliche optische Spektrum der von dem Plasma (4) emittierten Strahlung erfasst, um anschließend das emittierte Spektrum mit einer Bibliothek von bekannten Spektren zu vergleichen, **dadurch gekennzeichnet, dass** es die folgenden Schritte umfasst:
- einen Schritt der Beobachtung der Veränderungen der Amplitude der charakteristischen Linien (B, C, D, F, G, J, K) der majoritären und/oder leicht anregbaren gasförmigen Spezies entsprechend den Veränderungen der Konzentration der minoritären und/oder schwer anregbaren gasförmigen Spezies,
- einen Schritt des Erzeugens eines spezifischen Spektrums, während welchem man im charakteristischen Spektrum der majoritären und/oder leicht anregbaren gasförmigen Spezies empfindliche Linien (B, C, F, J), deren Amplitudenveränderung entsprechend den Veränderungen der Konzentration der minoritären und/oder schwer anregbaren gasförmigen Spezies größer als ein festgelegter Schwellwert ist, zurückhält,
- einen Schritt der Detektion, während welchem man von der Amplitude dieser Linie oder Linien (B, C, F, J) eine Information über die Konzentration der minoritären und/oder schwer anregbaren gasförmigen Spezies ableitet.

2. Verfahren nach Anspruch 1, wobei man während eines vorherigen Schrittes eine Kalibrierungsfunktion, welche die Veränderung der Amplitude der empfindlichen Linie oder Linien (B, C, F, J), welche entsprechend der Konzentration in einer minoritären und/oder schwer anregbaren gasförmigen Spezies zurückgehalten werden, erstellt und speichert.

3. Verfahren nach einem der Ansprüche 1 und 2, wobei die Schritte des Beobachtens und der Detektion bei konstantem Gesamtdruck ausgeführt werden.

4. Verfahren nach einem der Ansprüche 1 bis 3, wobei man im charakteristischen Spektrum der majoritären und/oder leicht anregbaren gasförmigen Spezies Linien (F, G), von denen eine Kombination wie beispielsweise der Durchschnitt unempfindlich für die Druckveränderungen des Gemisches ist, zurückhalt,

5. Verfahren nach einem der vorstehenden Ansprüche, wobei man Kalibrierungskurven unter Druck erstellt, anhand weicher man anschließend die Amplitudenwerte der Linien entsprechend dem Druck korrigiert, um daraus die Menge der tatsächlich vorhandenen Minoritätsspezies abzuleiten.

6. Verfahren nach einem der vorstehenden Ansprüche, umfassend einen vorherigen Schritt des Einrichtens einer Bibliothek von spezifischen Spektren, welche mindestens ein spezifisches Spektrum für jede zu überwachende majoritären und/oder leicht anregbaren gasförmigen Spezies enthält, wobei das besagte spezifische Spektrum durch die Spektralanalyse der majoritären und/oder leicht anregbaren gasförmigen Spezies anhand der Messkette, mit welcher man das Verfahren implementieren will, erzeugt wird, und man die besagte Bibliothek für ein späteres Vergleichen mit dem Spektrum des Gemisches benutzt.

7. Verfahren nach einem der vorstehenden Ansprüche, angewendet für die Detektion des Wasserdampfes als minoritäre und/oder schwer anregbare gasförmige Spezies in einem Gemisch.

8. Verfahren nach Anspruch 7, wobei die majoritäre und/oder leicht anregbare gasförmige Spezies Stickstoff ist.

9. Verfahren nach einem der Ansprüche 1 bis 8, wobei man:
- eine minoritäre gasförmige Spezies, weiche für den normalen Funktionszustand einer Ausrüstung (1), durch welche das analysierte gasförmige Gemisch fließt, repräsentativ ist, auswählt,
- die Veränderung der besagten ausgewählten minoritären gasförmigen Spezies in Echtzeit verfolgt,
- diese Veränderung mit den Referenzdaten für die Veränderung vergleicht, und
- im Fall einer Abweichung von den Referenzdaten für die Veränderung ein Warn- oder Steuersignal erzeugt.

10. Verfahren nach Anspruch 9, wobei man die eventuellen Entweichungen aus der Ausrüstung (1) durch Verfolgen des Vorhandenseins und der Veränderung der für die Entweichungen repräsentativen Minoritätsspezies überwacht, welche nicht innerhalb der Ausrüstung (1), jedoch außerhalb dieser Ausrüstung vorhanden ist.

11. Verfahren nach Anspruch 10, wobei man die Veränderung der für die Entweichungen aus der Ausrüstung (1) repräsentativen Minoritätsspezies mit der Folge der funktionalen Ereignisse der Ausrüstung (1) in zeitlichen Zusammenhang bringt, um daraus den Ursprung der Veränderungen in der besagten Entwicklung abzuleiten.

12. Verfahren nach einem der Ansprüche 1 bis 8, wobei man:
- eine minoritäre gasförmige Spezies, welche für den Zustand des Fortschreitens eines Verfahrens, welches das analysierte gasförmige Gemisch implementiert, repräsentativ ist, auswählt,
- die Veränderung der besagten ausgewählten minoritären gasförmigen Spezies in Echtzeit verfolgt,
- diese Veränderung mit den Referenzdaten vergleicht, und
- im Fall einer Abweichung von den Referenzdaten für das Verfahren ein Warn- oder Steuersignal erzeugt.

13. Verfahren nach einem der Ansprüche 1 bis 8, wobei man:
- eine minoritäre gasförmige Spezies, welche für den Zustand des Fortschreitens einer Entlüftung des Behälters mit Entiüftungsgasen, deren Detektion man ausführt, repräsentativ ist, auswählt,
- die Veränderung der besagten ausgewählten minoritären gasförmigen Spezies in Echtzeit verfolgt,
- diese Veränderung mit den Referenzdaten für die Entlüftung vergleicht, und
- ein Warn- oder Steuersignal erzeugt, wenn ein Zustand der Veränderungsdaten der Entlüftung, welcher das Ende der Entlüftung anzeigt, erreicht ist.

14. Verfahren nach Anspruch 13, wobei man das Vorhandensein und die Veränderung von Chlor in dem Behälter, welcher sich im Entlüftungszustand anhand von Stickstoff befindet, überwacht.

15. Verfahren nach einem beliebigen der Ansprüche 1 bis 8, wobei man;
- eine minoritäre gasförmige Spezies, weiche für den Rekonditionierungszustand einer sich in Rekonditionierung befindlichen Kammer repräsentativ ist, auswählt,
- die Veränderung der besagten ausgewählten minoritären gasförmigen Spezies in der besagten, sich in Rekonditionierung befindlichen Kammer in Echtzeit verfolgt,
- diese Veränderung mit den Referenzdaten für die Rekonditionierung der Kammer vergleicht, und
- ein Warn- oder Steuersignal erzeugt, wenn ein Zustand der Daten der besagten ausgewählten minoritären gasförmigen Spezies, welcher das Ende der Rekonditionierung der Kammer anzeigt, erreicht ist.

16. Vorrichtung zum Implementieren eines Verfahrens zur Detektion von minoritären und/oder schwer anregbaren gasförmigen Spezies, nach einem der vorstehenden Ansprüche, umfassend:
- eine Plasmaquelle (3, 5, 6), um ein Plasma (4) in dem zu untersuchenden gasförmigen Gemisch zu erzeugen,
- Mittel (7) zum Sammeln und Übertragen der von dem Plasma (4) emittierten Strahlung an ein optisches Spektrometer (8),
- einen Rechner (10) zum Analysieren der von dem optischen Spektrometer (8) emittierten Signale, wobei der Rechner (10) eine Zentraleinheit (11) und einen Speicher (14) einschließt, umfassend:
- einen programmbereich (14a) mit einem gespeicherten Programm, welches die Folge der Befehle, welche das Vorfahren implementieren, beinhaltet, und
- einen Bibliothekbereich (14b), welcher gespeicherte spezifische optische Spektren der zu analysierenden majoritären und/oder leicht anregbaren gasförmigen Spezies enthält, und eine Kalibrierungsfunktion, welche die Veränderung der Amplitude der empfindlichen Linien (R, C, F, J) entsprechend der Konzentration in minoritären und/oder schwer anregbaren gasförmigen Spezies darstellt.

17. Vorrichtung nach Anspruch 16 in Verbindung mit einer Ausrüstung (1), deren Entweichungen man ermitteln will, einschließlich Mittel (11) zum Synchronisieren der Detektion der minoritären gasförmigen Spezies, welche für die Entweichungen repräsentativ sind, mit den funktionalen Ereignissen der Ausrüstung (1).
